# EUROPÄISCHE PATENTSCHRIFT

(11) **EP 4 048 556 B1**
(45) Veröffentlichungstag und Bekanntmachung des Hinweises auf die Patenterteilung: **06.12.2023**
(21) Anmeldenummer: 20792378.0
(22) Anmeldetag: 13.10.2020
(51) Int. Cl.: B60Q 3/85, H05B 45/20, B60Q 3/80, B60Q 3/82

(54) **VERFAHREN UND VORRICHTUNG ZUM STEUERN EINER INNENRAUMBELEUCHTUNG FÜR EIN FAHRZEUG**
METHOD AND DEVICE FOR CONTROLLING THE INTERIOR LIGHTING OF A VEHICLE
PROCÉDÉ ET DISPOSITIF DE COMMANDE DE L'ÉCLAIRAGE INTÉRIEUR D'UN VÉHICULE

(30) Priorität: 24.10.2019 DE 102019216415
(43) Veröffentlichungstag der Anmeldung: 31.08.2022
(73) Patentinhaber: VOLKSWAGEN AKTIENGESELLSCHAFT, 38440 Wolfsburg (DE)
(72) Erfinder: KNIPP, Richard, 13585 Berlin (DE); HEINRICHS, André, 38518 Gifhorn (DE); BRETZ, Janine, 38556 Bokensdorf (DE); SIEGMUND, Margret, 38518 Gifhorn (DE)
(86) Internationale Anmeldenummer: PCT/EP2020/078791
(87) Internationale Veröffentlichungsnummer: WO 2021/078590

(56) Entgegenhaltungen:
- EP-A1- 2 905 174
- EP-A2- 2 982 541
- DE-A1-102006 030 300
- DE-A1-102012 010 044
- DE-A1-102012 024 042
- DE-A1-102013 009 063
- DE-A1-102015 011 891
- DE-A1-102016 005 062
- DE-A1-102016 005 255
- DE-A1-102016 007 120
- DE-A1-102017 005 126
- DE-A1-102018 005 476
- DE-B4-102006 030 300
- DE-B4-102013 009 063
- DE-U1-202015 001 767
- US-A1- 2019 021 156

## Beschreibung

Die Erfindung betrifft ein Verfahren und eine Vorrichtung zum Steuern einer Innenraumbeleuchtung für ein Fahrzeug.

Die Innenraumbeleuchtung eines Fahrzeugs erfüllt verschiedene Funktionen. Zum einen können Leuchten vorgesehen sein, die den Innenraum ausleuchten. Beispielsweise können im Fahrzeugdach Leseleuchten vorgesehen sein. Ferner können Leuchten zum Ausleuchten des Fußraums, des Handschuhfachs oder des Kofferraums vorgesehen sein. Zum anderen ist eine Instrumentenbeleuchtung vorgesehen, die insbesondere nachts verschiedene Bedienelemente im Innenraum des Fahrzeugs beleuchtet, sodass ein Fahrzeuginsasse auch bei Dunkelheit das entsprechende Bedienelement schnell finden kann. Schließlich ist für eine Anzeigevorrichtung für den Fahrer, die häufig auch als Kombiinstrument bezeichnet wird, eine Beleuchtung vorgesehen.

Neben den Leuchten im Fahrzeuginnenraum und der Instrumentenbeleuchtung können im Innenraum des Fahrzeugs weitere Beleuchtungseinrichtungen, insbesondere in Form von Leuchteinheiten, vorgesehen sein, die ein bestimmtes Ambiente, d.h. eine bestimmte Atmosphäre, vermitteln sollen. Neben der Lichtintensität ist ein wesentlicher Parameter zum Erzeugen des Ambientes die Farbe der Beleuchtung.

In der DE 10 2006 030 300 B4 ist ein Kraftfahrzeug mit im Innenraum verteilt angeordneten Leuchteinrichtungen bekannt. Hierbei können bestimmte Bereiche des Innenraums farblich unterschiedlich ausgeleuchtet werden.

Aus der DE 10 2017 005 126 A1 ist eine Beleuchtungseinrichtung zur Beleuchtung des Fahrzeuginnenraums eines Kraftfahrzeugs bekannt. Das Kraftfahrzeug umfasst mehrere Lichtquellen zum Beleuchten des Fahrzeuginnenraums und eine Steuerungseinrichtung, mittels welcher die mehreren Lichtquellen unabhängig voneinander ansteuerbar sind. Ferner weist das Kraftfahrzeug eine mit der Steuerungseinrichtung verbundene Bedieneinrichtung auf, welche Segmente und Bedienelemente umfasst, mittels welcher die Lichtquellen von einem

Benutzer unabhängig voneinander angesteuert werden können. Außerdem ist eine Anzeigeeinheit vorgesehen, welche zumindest ein Teilbild des von den steuerbaren Lichtquellen beleuchtbaren oder beleuchteten Fahrzeuginnenraums wiedergibt.

Aus der DE 10 2013 009 063 A1 ist ein Verfahren zum Steuern einer Lichtemission einer Innenraumbeleuchtung für ein Fahrzeug bekannt, wobei mehrere Leuchteinheiten im Innenraum des Fahrzeugs verteilt angeordnet sind. Bei dem Verfahren emittieren die Leuchteinheiten Licht einer Ausgangslichtintensität. Zum Ändern der Ausgangslichtintensität wird ein Lichtintensitätswert auf einer Anzeigeeinheit ausgewählt, welcher einer zu emittierenden Ziellichtintensität zugeordnet wird. Die Ziellichtintensität wird eingestellt, so dass die Leuchteinheiten Licht der Ziellichtintensität emittieren. Das Verfahren sieht vor, dass eine Darstellung zumindest eines Teilbereichs des Innenraums des Fahrzeugs auf der Anzeigeeinheit angezeigt wird, wobei in der Umgebung der Darstellung der Leuchteinheiten in der Darstellung des Teilbereichs des Innenraums der Lichtintensitätswert die Ausgangslichtintensität angezeigt wird. Bei dem Auswählen des Lichtintensitätswerts werden in Abhängigkeit von dem ausgewählten Lichtintensitätswert die Lichtintensitätswerte in der Umgebung der Darstellungen der Leuchteinheiten in der Darstellung des Teilbereichs des Innenraums von der Anzeigeeinheit verändert.

Weitere Verfahren und Vorrichtungen zum Einstellen einer Innenraumbeleuchtung eines Fahrzeugs sind aus der DE 10 2012 010 044 A1, EP 2 982 541 A2, DE 10 2006 030 300 A1, DE 10 2016 005 255 A1, DE 10 2015 011 891 A1, EP 2 905 174 A1 und DE 10 2012 024 042 A1 bekannt.

Der Erfindung liegt die Aufgabe zu Grunde, ein Verfahren und eine Vorrichtung zum Steuern einer Innenraumbeleuchtung für ein Fahrzeug zu verbessern.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zum Steuern einer Innenraumbeleuchtung für ein Fahrzeug zur Verfügung gestellt, wobei mehrere Leuchteinheiten im Innenraum des Fahrzeugs verteilt angeordnet sind, wobei die Leuchteinheiten jeweils einer von mindestens zwei Farbzonen zugeordnet sind oder zugeordnet werden, wobei auf einer Anzeige- und Bedieneinrichtung Anordnungsprofile von Anordnungen der mindestens zwei Farbzonen im Innenraum des Fahrzeugs angezeigt werden und eine Nutzerauswahl eines der Anordnungsprofile erfasst wird, und wobei für jede der mindestens zwei Farbzonen eine Farbauswahl des Nutzers jeweils mittels eines auf der Anzeige- und Bedieneinrichtung angezeigten Bedienelementes erfasst wird, und wobei für jede Leuchteinheit eine Farbe gemäß dem ausgewählten Anordnungsprofil und der für die mindestens zwei Farbzonen ausgewählten Farben mittels einer Steuereinrichtung eingestellt wird.

Ferner wird insbesondere eine Vorrichtung zum Steuern einer Innenraumbeleuchtung für ein Fahrzeug geschaffen, wobei mehrere Leuchteinheiten im Innenraum des Fahrzeugs verteilt angeordnet sind, wobei die Leuchteinheiten jeweils einer von mindestens zwei Farbzonen zugeordnet sind oder zugeordnet werden können, umfassend eine Anzeige- und Bedieneinrichtung und eine Steuereinrichtung, wobei die Anzeige- und Bedieneinrichtung derart ausgebildet ist, Anordnungsprofile von Anordnungen der mindestens zwei Farbzonen im Innenraum des Fahrzeugs anzuzeigen und eine Nutzerauswahl eines der Anordnungsprofile zu erfassen, und für jede der mindestens zwei Farbzonen eine Farbauswahl des Nutzers jeweils mittels eines angezeigten Bedienelementes zu erfassen, und wobei die Steuereinrichtung derart ausgebildet ist, für jede Leuchteinheit eine Farbe gemäß dem ausgewählten Anordnungsprofil und der für die mindestens zwei Farbzonen ausgewählten Farben einzustellen.

Das Verfahren und die Vorrichtung ermöglichen es, sowohl eine Anordnung der mindestens zwei Farbzonen im Innenraum des Fahrzeugs als auch die jeweiligen Farben der mindestens zwei Farbzonen auszuwählen. Dies erfolgt, indem auf einer Anzeige- und Bedieneinrichtung sowohl Anordnungsprofile von Anordnungen der mindestens zwei Farbzonen als auch Bedienelemente, mit denen jeweils eine Farbe für die mindestens zwei Farbzonen ausgewählt werden kann, dargestellt werden. Mittels der Anzeige- und Bedieneinrichtung können dann durch von dem Nutzer mittels eines Betätigungselementes, beispielsweise eines Fingers, vorgenommene Betätigungen ein gewünschtes Anordnungsprofil und gewünschte Farben der mindestens zwei Farbzonen ausgewählt werden. Durch die gleichzeitige Darstellung ist der Auswählprozess vereinfacht, weil der Nutzer eine verbesserte Rückmeldung darüber erhält, wo sich die Farbzonen im Fahrzeug befinden und welche Farben diesen zugeordnet sind.

Ein Vorteil des Verfahrens und der Vorrichtung ist, dass eine Übersichtlichkeit hinsichtlich einer Farbzuordnung und einer Anordnung der Farbzonen, insbesondere in Bezug auf ein Zusammenspiel bzw. eine Kombination der Farben, beim Auswählen erhöht ist. Insbesondere wird eine Zuordnung von Farben zu den Farbzonen deutlich vereinfacht und eine Rückmeldung über die zugeordneten Farben und eine Anordnung der Farbzonen innerhalb des Innenraums des Fahrzeugs ist verbessert.

Ein Anordnungsprofil definiert insbesondere eine Anordnung der mindestens zwei Farbzonen im Innenraum des Fahrzeugs. Hierbei kann es auch mehrere nicht miteinander zusammenhängende räumliche Zonen innerhalb des Innenraums geben, die einer einzigen Farbzone zugeordnet sind (z.B. können die Türtaschen aller Fahrzeugtüren einer Farbzone zugeordnet sein). So kann beispielsweise vorgesehen sein, dass eine Farbzone A und eine Farbzone B räumlich in der vertikalen Abfolge ABAB oder BABA in dem Innenraum verteilt sind. Es kann ferner vorgesehen sein, dass mehr als zwei Farbzonen vorhanden sind. Insbesondere ist vorgesehen, dass die Anordnungsprofile bzw. Anordnungen jeweils als graphische Darstellung bzw. als graphisch ausgestaltetes virtuelles Bedienelement auf der Anzeige- und Bedieneinrichtung dargestellt werden und jeweils über das virtuelle Bedienelement auswählbar sind. Die graphische Ausgestaltung des virtuellen Bedienelement kann hierbei einen Innenraum des Fahrzeugs detaillierter nachbilden oder auch als stark vereinfachte Darstellung, beispielsweise als horizontale Schichtenfolge (z.B. ABAB), ausgebildet sein. Für die im oben genannten Beispiel verwendeten Farbzonen A und B können beispielsweise die folgenden Schichtenfolgen jeweils als virtuelle Bedienelemente, die graphisch beispielsweise als Kacheln mit entsprechenden geometrischen Bereichen ausgestaltet sind, dargestellt und ausgewählt werden: AB, BA, ABAB und BABA. Ein Nutzer kann dann durch Betätigen des jeweiligen virtuellen Bedienelements das gewünschte Anordnungsprofil auswählen.

Es kann vorgesehen sein, dass zusätzlich auch ein oder mehrere Anordnungsprofile auf der Anzeige- und Bedieneinrichtung angezeigt werden und über diese auswählbar sind, in denen lediglich eine (einzige) Farbzone den Leuchteinheiten zugeordnet ist. Ferner kann vorgesehen sein, dass ein Anordnungsprofil eine oder mehrere Farbzonen enthält, für die keine Farbauswahl erfolgen kann, sondern bei denen eine Farbe fest vorgegeben ist.

Eine Leuchteinheit ist insbesondere als Rot-Grün-Blau-Leuchtdiode (RGB-LED) ausgebildet. Diese kann innerhalb eines Farbraums beliebige Farben darstellen. Die RGB-LEDs werden mittels der Steuereinrichtung zum Darstellen einer entsprechenden Farbe angesteuert.

Eine Anzeige- und Bedieneinrichtung ist insbesondere eine berührungsempfindliche Anzeige- und Bedieneinrichtung, insbesondere ein Touchscreen. Mittels des Touchscreens können Bedienelemente dargestellt und betätigt werden. Die Anzeige- und Bedieneinrichtung wird insbesondere mittels der Steuereinrichtung gesteuert, das heißt die Steuereinrichtung stellt einen anzuzeigenden Inhalt für die Anzeige- und Bedieneinrichtung bereit und verarbeitet Betätigungen, die auf bzw. mittels der Anzeige- und Bedieneinrichtung erfasst werden.

Ein Bedienelement ist insbesondere ein virtuelles Bedienelement. Eine solches virtuelles Bedienelement ist kein physisch ausgebildetes Bedienelement, sondern umfasst eine graphische Darstellung auf der Anzeige- und Bedieneinrichtung, die mittels eines Betätigungselements, beispielsweise eines Fingers, betätigt werden kann.

Teile der Vorrichtung, insbesondere die Steuereinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind.

In einer Ausführungsform ist vorgesehen, dass eine graphische Darstellung der Anordnungsprofile auf der Anzeige- und Bedieneinrichtung in Abhängigkeit einer erfassten Farbauswahl angepasst wird. Insbesondere ist vorgesehen, dass eine Darstellung der Farben innerhalb der Anordnungsprofile beim Auswählen der Farben für die mindestens zwei Farbzonen in Echtzeit angepasst wird. Hierdurch erhält ein Nutzer sofort eine Rückmeldung darüber, wie sich eine Änderung der ausgewählten Farbe auf die Anordnung der Farbzonen innerhalb der Anordnungsprofile auswirkt. Ist für die Farbzonen A und B ein Anordnungsprofil beispielsweise ABAB, welches als virtuelles Bedienelement durch eine einfache graphische Darstellung in Form einer Schichtenfolge ABAB verdeutlicht wird, und wird eine Farbe der Farbzone A verändert, so verändert sich zeitgleich auch die jeweils in dem virtuellen Bedienelement für die Farbzone A dargestellte Farbe auf der Anzeige- und Bedieneinrichtung.

In einer Ausführungsform ist vorgesehen, dass die Bedienelemente als Slider ausgebildet sind, mit denen jeweils eine Farbe für eine der mindestens zwei Farbzonen eingestellt werden kann. Es kann hierbei vorgesehen sein, dass entlang einer Ausdehnungsrichtung des Sliders eine mit der jeweiligen Sliderstellung korrespondierende Farbe dargestellt wird.

In einer Ausführungsform ist vorgesehen, dass nach Auswählen einer Farbe für eine erste der mindestens zwei Farbzonen eine Menge der für mindestens eine weitere der mindestens zwei Farbzonen auswählbaren Farben in Abhängigkeit der ausgewählten Farbe festgelegt wird. Hierdurch kann eine Abhängigkeit geschaffen werden zwischen den jeweils ausgewählten Farben. Insbesondere kann hierdurch eine auf eine erste Farbauswahl nachfolgende Farbauswahl ihrem Umfang nach beschränkt werden. Dies ermöglicht es, eine Anzahl von möglichen Farbkombinationen zu beschränken. Das Festlegen der Menge in Abhängigkeit der ausgewählten Farbe erfolgt insbesondere mittels der Steuereinrichtung.

Es kann vorgesehen sein, dass bei Vorhandensein von mehr als zwei Farbzonen auch eine Menge von auswählbaren Farben bei einer auf eine erste und eine zweite Farbauswahl nachfolgenden Farbauswahl in gleicher Weise festgelegt wird. Insbesondere kann eine Menge von auswählbaren Farben mit jeder erfolgten Farbauswahl sukzessive weiter beschränkt werden.

In einer Ausführungsform ist vorgesehen, dass Farben der festgelegten Menge zur Auswahl durch den Nutzer auf der Anzeige- und Bedieneinrichtung angezeigt werden. Hierdurch kann einem Nutzer nach einer erfolgten ersten Farbauswahl direkt eine Rückmeldung darüber gegeben werden, welche Farben der Nutzer im Rahmen von weiteren Farbauswahlen noch auswählen kann.

In einer Ausführungsform ist vorgesehen, dass auswählbare Farben in Form eines Farbkreises auf der Anzeige- und Bedieneinrichtung dargestellt werden und/oder dass die Farben der festgelegten Menge in Form eines Farbkreises auf der Anzeige- und Bedieneinrichtung dargestellt werden. Hierdurch kann eine besonders übersichtliche Darstellungsweise und Rückmeldung erfolgen. Insbesondere ist vorgesehen, dass ein Nutzer eine Farbe direkt durch Betätigen eines mit einer in dem Farbkreis dargestellten Farbe korrespondierenden Teils eines virtuellen Bedienelement auswählen kann.

In einer Ausführungsform ist vorgesehen, dass die Menge auf Grundlage einer in einer Speichereinrichtung hinterlegten Liste bestimmt wird, wobei die Liste Zuordnungen von ausgewählten Farben zu Mengen von Farben umfasst. Ist eine erste Farbauswahl erfolgt, so wird aus der Liste eine zugehörige Menge von Farben abgefragt. Die von der Menge umfassten Farben werden anschließend beispielsweise auf der Anzeige- und Bedieneinrichtung zur Auswahl angeboten. Die hinterlegte Liste ermöglicht es, Farbkombinationen für die mindestens zwei Farbzonen beispielsweise nach ästhetischen, stimmungsfördernden, wahrnehmungspsychologischen, physiologischen und/oder individuellen Gesichtspunkten festzulegen.

In einer Ausführungsform ist vorgesehen, dass die Menge ausgehend von der ausgewählten Farbe derart bestimmt wird, dass die Menge Farben umfasst, die zur selben Farbfamilie gehören. Eine Farbfamilie ist hierbei insbesondere definiert durch einander benachbarte Farben innerhalb eines Farbkreises, der ausgehend von Primärfarben (Rot, Blau, Gelb), Sekundärfarben (Grün, Orange, Violett) und Tertiärfarben (Mischung einer Primärfarbe mit einer Sekundärfarbe oder Mischung von zwei Sekundärfarben), gebildet wird. Die Menge kann dann beispielsweise über eine Anzahl nächster Nachbarn definiert sein (z.B. durch Einbeziehen von drei Nachbarn in die eine Richtung und drei Nachbarn in die andere Richtung des Farbkreises).

In einer Ausführungsform ist vorgesehen, dass die Menge ausgehend von der ausgewählten Farbe derart bestimmt wird, dass die Menge Farben umfasst, die in einem vorgegebenen Farbraum innerhalb eines vorgegebenen Abstands um die ausgewählte Farbe herum liegen. Beispielsweise kann in einem RGB-Farbraum (z.B. dargestellt innerhalb der CIE-Normfarbtafel) ein Abstand um die ausgewählte Farbe herum in Form eines Abstandsvektors oder Abstandsradius (z.B. definiert über die x- und y-Koordinaten der CIE-Normfarbtafel) definiert werden. Alle Farben, die innerhalb des durch den Abstandsvektor bzw. den Abstandsradius definierten Umkreis um die ausgewählte Farbe liegen, sind von der Menge umfasst.

Weiter kann vorgesehen sein, dass die Menge ausgehend von der ausgewählten Farbe derart bestimmt wird, dass die Menge Farben umfasst, die zur Farbfamilie der Komplementärfarbe der ausgewählten Farbe gehören.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Steuern einer Innenraumbeleuchtung für ein Fahrzeug;
- Fig. 2: eine schematische Darstellung eines auf einer Anzeige- und Bedieneinrichtung dargestellten Konfigurationsmenüs für eine Ausführungsform des Verfahrens bzw. der Vorrichtung;
- Fig. 3: eine schematische Darstellung eines auf einer Anzeige- und Bedieneinrichtung dargestellten Konfigurationsmenüs für eine weitere Ausführungsform des Verfahrens bzw. der Vorrichtung.

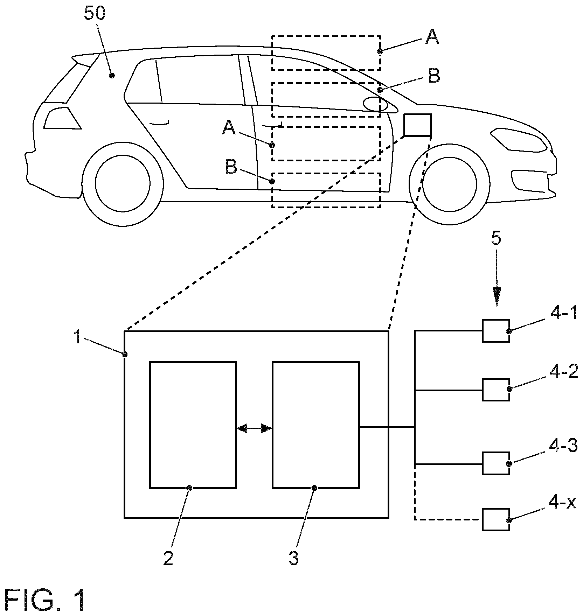

In Fig. 1 ist eine schematische Darstellung einer Ausführungsform der Vorrichtung 1 zum Steuern einer Innenraumbeleuchtung 5 für ein Fahrzeug 50 gezeigt. Die Vorrichtung 1 umfasst eine als Touchscreen ausgebildete berührungsempfindliche Anzeige- und Bedieneinrichtung 2 und eine Steuereinrichtung 3. Die Vorrichtung 1 führt insbesondere das offenbarte Verfahren zum Steuern der Innenraumbeleuchtung 5 für das Fahrzeug 50 aus.

Die Innenraumbeleuchtung 5 ist derart ausgestaltet, dass mehrere Leuchteinheiten 4-x im Innenraum des Fahrzeugs 50 verteilt angeordnet sind, wobei die Leuchteinheiten 4-x jeweils einer von mindestens zwei Farbzonen A, B zugeordnet sind oder zugeordnet werden können. Der Übersichtlichkeit halber sind die Leuchteinheiten 4-x nicht im Fahrzeug 50, sondern außerhalb hiervon dargestellt. Eine Zuordnung erfolgt hierbei insbesondere logisch, das heißt eine Zuordnung erfolgt durch entsprechendes Ansteuern der Leuchteinheiten 4-x mittels der Steuereinrichtung 3. Eine oder mehrere Zuordnungen sind beispielsweise in einer Speichereinrichtung der Steuereinrichtung 2 hinterlegt und können beispielsweise über ein hierfür vorgesehenes Konfigurationsmenü auf der Anzeige- und Bedieneinrichtung 2 verändert werden.

Zum Steuern der Innenraumbeleuchtung 5 zeigt die Anzeige- und Bedieneinrichtung 2, beispielsweise nach Anwahl eines hierfür vorgesehenen Konfigurationsmenüs, Anordnungsprofile von Anordnungen der mindestens zwei Farbzonen A, B im Innenraum des Fahrzeugs 50 an und erfasst eine Nutzerauswahl eines der Anordnungsprofile. Es kann beispielsweise vorgesehen sein, dass für jedes Anordnungsprofil jeweils ein virtuelles Bedienelement dargestellt wird, das eine graphische Darstellung einer zugehörigen Anordnung der Farbzonen A, B zeigt. Durch Betätigen des virtuellen Bedienelements kann das zugehörige Anordnungsprofil vom Nutzer ausgewählt werden.

Ferner erfasst die Anzeige- und Bedieneinrichtung 2 für jede der mindestens zwei Farbzonen A, B eine Farbauswahl des Nutzers jeweils mittels eines auf der Anzeige- und Bedieneinrichtung 2 angezeigten virtuellen Bedienelementes. Die jeweils getätigte Auswahl wird der Steuereinrichtung 3 zugeführt.

Die Steuereinrichtung 3 stellt für jede Leuchteinheit 4-x eine Farbe gemäß dem ausgewählten Anordnungsprofil und der für die mindestens zwei Farbzonen A, B ausgewählten Farben ein, beispielsweise indem entsprechende Farbwerte (z.B. RGB-Werte für RGB-LEDs) an Steuereinheiten (nicht gezeigt) der Leuchteinheiten 4-x übergeben werden.

Es kann vorgesehen sein, dass die graphische Darstellung der Anordnungsprofile auf der Anzeige- und Bedieneinrichtung 2 in Abhängigkeit einer erfassten Farbauswahl angepasst wird. Das Anpassen erfolgt insbesondere zeitgleich, sodass eine direkte Rückmeldung für den Nutzer erfolgt.

Es kann vorgesehen sein, dass die Bedienelemente als Slider ausgebildet sind, mit denen jeweils eine Farbe für eine der mindestens zwei Farbzonen A, B eingestellt werden kann.

Es kann vorgesehen sein, dass nach Auswählen einer Farbe für eine erste der mindestens zwei Farbzonen A, B eine Menge der für mindestens eine weitere der mindestens zwei Farbzonen A, B auswählbaren Farben in Abhängigkeit der ausgewählten Farbe festgelegt wird. Insbesondere legt die Steuereinrichtung 3 die Menge fest.

Weiterbildend kann vorgesehen sein, dass Farben der festgelegten Menge zur Auswahl durch den Nutzer auf der Anzeige- und Bedieneinrichtung 2 angezeigt werden. Die Steuereinrichtung 3 steuert die Anzeige- und Bedieneinrichtung 2 entsprechend an.

Es kann vorgesehen sein, dass auswählbare Farben in Form eines Farbkreises auf der Anzeige- und Bedieneinrichtung 2 dargestellt werden und/oder dass die Farben der festgelegten Menge in Form eines Farbkreises auf der Anzeige- und Bedieneinrichtung 2 dargestellt werden. Die Steuereinrichtung 3 steuert die Anzeige- und Bedieneinrichtung 2 entsprechend an.

Es kann vorgesehen sein, dass die Menge auf Grundlage einer in einer Speichereinrichtung der Steuereinrichtung 3 hinterlegten Liste bestimmt wird, wobei die Liste Zuordnungen von ausgewählten Farben zu Mengen von Farben umfasst.

Ferner kann vorgesehen sein, dass die Menge ausgehend von der ausgewählten Farbe derart bestimmt wird, dass die Menge Farben umfasst, die zur selben Farbfamilie gehören.

Es kann weiter vorgesehen sein, dass die Menge ausgehend von der ausgewählten Farbe derart bestimmt wird, dass die Menge Farben umfasst, die in einem vorgegebenen Farbraum innerhalb eines vorgegebenen Abstands um die ausgewählte Farbe herum liegen.

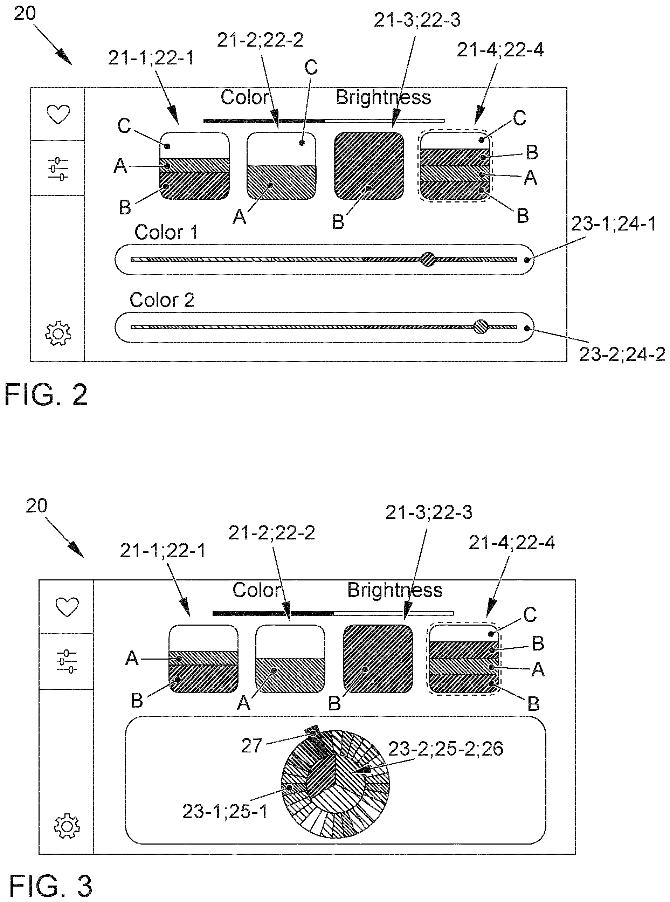

In Fig. 2 ist eine schematische Darstellung eines auf einer Anzeige- und Bedieneinrichtung dargestellten Konfigurationsmenüs 20 für eine Ausführungsform des Verfahrens bzw. der Vorrichtung gezeigt. Das Konfigurationsmenü 20 dient dem verfahrensgemäßen Auswählen eines Anordnungsprofils 21-x und der jeweiligen Farben von mindestens zwei Farbzonen A, B.

Für jedes Anordnungsprofil 21-x ist jeweils ein virtuelles Bedienelement 22-x dargestellt, das als quadratische Kachel ausgebildet ist. In jedem virtuellen Bedienelement 22-x ist eine vereinfachte graphische Darstellung einer Anordnung der Farbzonen A, B in dem Innenraum des Fahrzeugs dargestellt. Hierbei erfolgt die Darstellung im gezeigten Beispiel vereinfacht in Form einer Abfolge von horizontal im Innenraum verlaufenden Farbzonen-Schichten. Es kann vorgesehen sein, dass zusätzlich auch ein oder mehrere Anordnungsprofile 21-x auf der Anzeige- und Bedieneinrichtung angezeigt werden und über diese auswählbar sind, in denen lediglich eine (einzige) Farbzone A, B den Leuchteinheiten zugeordnet ist bzw. für die lediglich eine Farbe auswählbar ist (z.B. ist im Anordnungsprofil 21-2 nur die Farbzone A vorhanden, für die eine Farbe ausgewählt werden kann, im Anordnungsprofil 21-3 hingegen nur die Farbzone B, für die eine Farbe ausgewählt werden kann). Zusätzlich zu den zwei Farbzonen A, B, für die eine Farbe gewählt werden kann, kann eine Farbzone C vorgesehen sein, für die keine Farbauswahl getroffen werden kann, sondern für die eine Farbe fest vorgegeben ist. Im gezeigten Beispiel weist diese Farbzone C beispielsweise die fest vorgegebene Farbe "Weiß" auf.

Ein Nutzer kann durch Betätigung der virtuellen Bedienelemente 22-x jeweils ein zugehöriges Anordnungsprofil 21-x auswählen. Nach Auswählen eines der Anordnungsprofile 21-x steuert die Steuereinrichtung die Leuchteinheiten gemäß dem ausgewählten Anordnungsprofil 21-x an.

Ferner sind in dem Konfigurationsmenü 20 zwei virtuelle Bedienelemente 23-x in Form von Slidern 24-x dargestellt. Diese ermöglichen eine Auswahl der Farben für die zwei Farbzonen A und B. Hierbei ist für jede der Positionen der Slider 24-x eine mit der jeweiligen Position korrespondierende Farbe dargestellt, sodass ein Nutzer direkt eine Rückkopplung über die ausgewählte bzw. auswählbare Farbe und die zum Auswählen jeweils notwendige Position erhält.

Insbesondere ist vorgesehen, dass eine mittels der Slider 24-x vorgenommene Änderung der Farben der Farbzonen A, B zeitgleich in den virtuellen Bedienelementen 22-x der Anordnungsprofile 21-x dargestellt wird, sodass ein Nutzer sofort eine Rückkopplung darüber erhält, wie sich die Änderung auf die Kombination der Farben in der jeweiligen Anordnung der Farbzonen A, B niederschlägt.

In Fig. 3 ist eine schematische Darstellung eines auf einer Anzeige- und Bedieneinrichtung dargestellten Konfigurationsmenüs 20 für eine weitere Ausführungsform des Verfahrens bzw. der Vorrichtung gezeigt. Das Konfigurationsmenü 20 dient dem verfahrensgemäßen Auswählen eines Anordnungsprofils 21-x und der jeweiligen Farben von mindestens zwei Farbzonen A, B. Das Konfigurationsmenü 20 ist im oberen Bereich identisch zu dem in der Fig. 2 gezeigten Konfigurationsmenü 20 ausgestaltet. Gleiche Bezugszeichen bezeichnen gleiche Merkmale und Begriffe.

Im Gegensatz zu dem in der Fig. 2 gezeigten Konfigurationsmenü 20 weist das Konfigurationsmenü 20 in dieser Ausführungsform des Verfahrens bzw. der Vorrichtung keine Slider, sondern ein als Farbkreis 25-1 ausgestaltetes virtuelles Bedienelement 23-1 auf. Ein Nutzer kann eine Farbe einer ersten der zwei Farbzonen A, B durch Betätigen einer im Farbkreis 25 dargestellten Farbe auswählen.

Es ist vorgesehen, dass nach Auswählen der Farbe für die erste der zwei Farbzonen A, B eine Menge 26 der für die andere der zwei Farbzonen A, B auswählbaren Farben in Abhängigkeit der ausgewählten Farbe 27 festgelegt wird. Die festgelegte Menge 26 ist insbesondere hinsichtlich eines Umfangs kleiner als die Menge der Farben, aus der für die erste der zwei Farbzonen A, B ausgewählt werden konnte. Die Menge 26 kann beispielsweise in Form eines als weiterer Farbkreis 25-2 ausgestalteten virtuellen Bedienelements 23-2 dargestellt werden.

Es kann hierbei vorgesehen sein, dass die Menge 26 auf Grundlage einer in einer Speichereinrichtung hinterlegten Liste bestimmt wird, wobei die Liste Zuordnungen von ausgewählten Farben zu Mengen 26 von Farben umfasst.

Ferner kann vorgesehen sein, dass die Menge 26 ausgehend von der ausgewählten Farbe derart bestimmt wird, dass die Menge 26 Farben umfasst, die zur selben Farbfamilie gehören.

Weiter kann vorgesehen sein, dass die Menge 26 ausgehend von der ausgewählten Farbe 27 derart bestimmt wird, dass die Menge 26 Farben umfasst, die in einem vorgegebenen Farbraum innerhalb eines vorgegebenen Abstands um die ausgewählte Farbe 27 herum liegen.

Weiter kann vorgesehen sein, dass die Menge 26 ausgehend von der ausgewählten Farbe 27 derart bestimmt wird, dass die Menge 26 Farben umfasst, die zur Farbfamilie der Komplementärfarbe der ausgewählten Farbe 27 gehören.

### Bezugszeichenliste

- 1: Vorrichtung
- 2: Anzeige- und Bedieneinrichtung
- 3: Steuereinrichtung
- 4-x: Leuchteinheit
- 5: Innenraumbeleuchtung
- 20: Konfigurationsmenü
- 21-x: Anordnungsprofil
- 22-x: virtuelles Bedienelement
- 23-x: virtuelles Bedienelement
- 24-x: Slider
- 25-1: Farbkreis
- 25-2: weiterer Farbkreis
- 26: Menge
- 27: ausgewählte Farbe
- 50: Fahrzeug
- A: Farbzone (wählbare Farbe)
- B: Farbzone (wählbare Farbe)
- C: Farbzone (feste Farbe)

## Patentansprüche

1. Verfahren zum Steuern einer Innenraumbeleuchtung (5) für ein Fahrzeug (50), wobei mehrere Leuchteinheiten (4-x) im Innenraum des Fahrzeugs (50) verteilt angeordnet sind, wobei die Leuchteinheiten (4-x) jeweils logisch einer von mindestens zwei Farbzonen (A,B) zugeordnet sind oder zugeordnet werden,
wobei auf einer Anzeige- und Bedieneinrichtung (2) Anordnungsprofile (21-x) von Anordnungen der mindestens zwei Farbzonen (A,B) im Innenraum des Fahrzeugs (50) angezeigt werden und eine Nutzerauswahl eines der Anordnungsprofile (21-x) erfasst wird, wobei jedes Anordnungsprofil (21-x) hierbei eine Anordnung der mindestens zwei Farbzonen im Innenraum des Fahrzeugs (50) definiert, und wobei für jede der mindestens zwei Farbzonen (A,B) eine Farbauswahl des Nutzers jeweils mittels eines auf der Anzeige- und Bedieneinrichtung (2) angezeigten Bedienelementes (23-x) erfasst wird, und wobei für jede Leuchteinheit (4-x) eine Farbe gemäß dem ausgewählten Anordnungsprofil (21-x) und der für die mindestens zwei Farbzonen (A,B) ausgewählten Farben mittels einer Steuereinrichtung (3) eingestellt wird.

2. Verfahren nach Anspruch 1, **dadurch gekennzeichnet, dass** eine graphische Darstellung der Anordnungsprofile (21-x) auf der Anzeige- und Bedieneinrichtung (2) in Abhängigkeit einer erfassten Farbauswahl angepasst wird.

3. Verfahren nach Anspruch 1 oder 2, **dadurch gekennzeichnet, dass** die Bedienelemente (23-x) als Slider (24-x) ausgebildet sind, mit denen jeweils eine Farbe für eine der mindestens zwei Farbzonen (A,B) eingestellt werden kann.

4. Verfahren nach einem der vorangegangenen Ansprüche, **dadurch gekennzeichnet, dass** nach Auswählen einer Farbe für eine erste der mindestens zwei Farbzonen (A,B) eine Menge (26) der für mindestens eine weitere der mindestens zwei Farbzonen (A, B) auswählbaren Farben in Abhängigkeit der ausgewählten Farbe (27) festgelegt wird.

5. Verfahren nach Anspruch 4, **dadurch gekennzeichnet, dass** Farben der festgelegten Menge (26) zum Auswählen durch den Nutzer auf der Anzeige- und Bedieneinrichtung (2) angezeigt werden.

6. Verfahren nach einem der vorangegangenen Ansprüche, **dadurch gekennzeichnet, dass** auswählbare Farben in Form eines Farbkreises (25-1) auf der Anzeige- und Bedieneinrichtung (2) dargestellt werden und/oder dass die Farben der festgelegten Menge (26) in Form eines Farbkreises (25-2) auf der Anzeige- und Bedieneinrichtung (2) dargestellt werden.

7. Verfahren nach einem der Ansprüche 4 bis 6, **dadurch gekennzeichnet, dass** die Menge (26) auf Grundlage einer in einer Speichereinrichtung hinterlegten Liste bestimmt wird, wobei die Liste Zuordnungen von ausgewählten Farben (27) zu Mengen (26) von Farben umfasst.

8. Verfahren nach einem der Ansprüche 4 bis 7, **dadurch gekennzeichnet, dass** die Menge (26) ausgehend von der ausgewählten Farbe (27) derart bestimmt wird, dass die Menge (26) Farben umfasst, die zur selben Farbfamilie gehören.

9. Verfahren nach einem der Ansprüche 4 bis 8, **dadurch gekennzeichnet, dass** die Menge (26) ausgehend von der ausgewählten Farbe (27) derart bestimmt wird, dass die Menge (26) Farben umfasst, die in einem vorgegebenen Farbraum innerhalb eines vorgegebenen Abstands um die ausgewählte Farbe (27) herum liegen.

10. Vorrichtung (1) zum Steuern einer Innenraumbeleuchtung (5) für ein Fahrzeug (50), wobei mehrere Leuchteinheiten (4-x) im Innenraum des Fahrzeugs (50) verteilt angeordnet sind, wobei die Leuchteinheiten (4-x) jeweils logisch einer von mindestens zwei Farbzonen (A,B) zugeordnet sind oder zugeordnet werden können, umfassend:
- eine Anzeige- und Bedieneinrichtung (2), und
- eine Steuereinrichtung (3),
wobei die Anzeige- und Bedieneinrichtung (2) derart ausgebildet ist,
Anordnungsprofile (21-x) von Anordnungen der mindestens zwei Farbzonen (A,B) im Innenraum des Fahrzeugs (50) anzuzeigen und eine Nutzerauswahl eines der Anordnungsprofile (21-x) zu erfassen, wobei jedes Anordnungsprofil (21-x) hierbei eine Anordnung der mindestens zwei Farbzonen im Innenraum des Fahrzeugs (50) definiert, und
für jede der mindestens zwei Farbzonen (A,B) eine Farbauswahl des Nutzers jeweils mittels eines angezeigten Bedienelementes (23-x) zu erfassen, und
wobei die Steuereinrichtung (3) derart ausgebildet ist, für jede Leuchteinheit (4-x) eine Farbe gemäß dem ausgewählten Anordnungsprofil (21-x) und der für die mindestens zwei Farbzonen (A,B) ausgewählten Farben einzustellen.

## Claims

1. Method for controlling interior lighting (5) for a vehicle (50), wherein a plurality of lighting units (4-x) are arranged in a manner distributed in the interior of the vehicle (50), wherein each of the lighting units (4-x) has been assigned or is assigned logically to one of at least two colour zones (A, B),
wherein arrangement profiles (21-x) of arrangements of the at least two colour zones (A, B) in the interior of the vehicle (50) are displayed on a display and operating device (2), and a user selection of one of the arrangement profiles (21-x) is detected, wherein each arrangement profile (21-x) here defines an arrangement of the at least two colour zones in the interior of the vehicle (50), and wherein a colour selection by the user is detected for each of the at least two colour zones (A, B) in each case by means of an operating element (23-x) displayed on the display and operating device (2), and wherein a colour is set for each lighting unit (4-x) by means of a control device (3) in accordance with the selected arrangement profile (21-x) and the colours selected for the at least two colour zones (A, B).

2. Method according to Claim 1, **characterized in that** a graphical representation of the arrangement profiles (21-x) on the display and operating device (2) is adapted depending on a detected colour selection.

3. Method according to Claim 1 or 2, **characterized in that** the operating elements (23-x) are configured as sliders (24-x), each of which can be used to set a colour for one of the at least two colour zones (A, B).

4. Method according to any of the preceding claims, **characterized in that** after selecting a colour for a first of the at least two colour zones (A, B), a set (26) of the colours that are selectable for at least one other of the at least two colour zones (A, B) is defined depending on the selected colour (27).

5. Method according to Claim 4, **characterized in that** colours of the defined set (26) are displayed for selection by the user on the display and operating device (2) .

6. Method according to any of the preceding claims, **characterized in that** selectable colours are represented in the form of a colour circle (25-1) on the display and operating device (2) and/or **in that** the colours of the defined set (26) are represented in the form of a colour circle (25-2) on the display and operating device (2).

7. Method according to any of Claims 4 to 6, **characterized in that** the set (26) is determined on the basis of a list stored in a storage device, wherein the list comprises assignments of selected colours (27) to sets (26) of colours.

8. Method according to any of Claims 4 to 7, **characterized in that** the set (26) is determined proceeding from the selected colour (27) in such a way that the set (26) comprises colours that belong to the same colour family.

9. Method according to any of Claims 4 to 8, **characterized in that** the set (26) is determined proceeding from the selected colour (27) in such a way that the set (26) comprises colours that are in a predefined colour space within a predefined distance around the selected colour (27) .

10. Apparatus (1) for controlling interior lighting (5) for a vehicle (50), wherein a plurality of lighting units (4-x) are arranged in a manner distributed in the interior of the vehicle (50), wherein each of the lighting units (4-x) has been assigned or can be assigned logically to one of at least two colour zones (A, B), comprising:
- a display and operating device (2), and
- a control device (3),
wherein the display and operating device (2) is configured so as
to display arrangement profiles (21-x) of arrangements of the at least two colour zones (A, B) in the interior of the vehicle (50) and to detect a user selection of one of the arrangement profiles (21-x), wherein each arrangement profile (21-x) here defines an arrangement of the at least two colour zones in the interior of the vehicle (50), and
to detect a colour selection by the user for each of the at least two colour zones (A, B) in each case by means of a displayed operating element (23-x), and
wherein the control device (3) is configured so as to set a colour for each lighting unit (4-x) in accordance with the selected arrangement profile (21-x) and the colours selected for the at least two colour zones (A, B).

## Revendications

1. Procédé de commande d'un éclairage d'habitacle (5) d'un véhicule (50), plusieurs unités d'éclairage (4-x) étant disposées de manière répartie dans l'habitacle du véhicule (50), les unités d'éclairage (4-x) étant ou pouvant être associées de manière logique à l'une d'au moins deux zones de couleur (A, B),
des profils (21-x) d'agencements des au moins deux zones de couleur (A, B) dans l'habitacle du véhicule (50) étant affichés sur un module d'affichage et de commande (2) et une sélection par utilisateur de l'un des profils d'agencement (21-x) étant saisie, chaque profil d'agencement (21-x) définissant un agencement des au moins deux zones de couleur dans l'habitacle du véhicule (50), et une sélection de couleur d'un utilisateur étant saisie, pour chacune des au moins deux zones de couleur (A, B), au moyen d'un élément de commande (23-x) affiché sur le module d'affichage et de commande (2), et une couleur étant réglée, pour chaque unité d'éclairage (4-x), en fonction du profil d'agencement sélectionné (21-x) et des couleurs, sélectionnées pour lesdites au moins deux zones de couleur (A, B), au moyen d'un module de commande (3).

2. Procédé selon la revendication 1, **caractérisé en ce qu'**une représentation graphique des profils d'agencement (21-x) sur le module d'affichage et de commande (2) est adaptée en fonction d'une sélection de couleurs saisie.

3. Procédé selon la revendication 1 ou 2, **caractérisé en ce que** les éléments de commande (23-x) sont conçus sous la forme de curseurs (24-x) qui permettent de régler une couleur pour l'une des au moins deux zones de couleur (A ,B).

4. Procédé selon l'une des revendications précédentes, **caractérisé en ce que**, après sélection d'une couleur pour une première des au moins deux zones de couleur (A, B), un ensemble (26) des couleurs sélectionnables pour au moins une autre des au moins deux zones de couleur (A, B) est spécifié en fonction de la couleur sélectionnée (27).

5. Procédé selon la revendication 4, **caractérisé en ce que** les couleurs de l'ensemble spécifié (26) sont affichées sur le module d'affichage et de commande (2) en vue de la sélection par l'utilisateur.

6. Procédé selon l'une des revendications précédentes, **caractérisé en ce que** des couleurs sélectionnables sont affichées sous la forme d'un cercle chromatique (25-1) sur le module d'affichage et de commande (2) et/ou **en ce que** les couleurs de l'ensemble spécifié (26) sont représentées sous la forme d'un cercle chromatique (25-2) sur le module d'affichage et de commande (2).

7. Procédé selon l'une des revendications 4 à 6, **caractérisé en ce que** l'ensemble (26) est déterminé sur la base d'une liste stockée dans un module de mémorisation, la liste comprenant des associations de couleurs sélectionnées (27) à des ensembles (26) de couleurs.

8. Procédé selon l'une des revendications 4 à 7, **caractérisé en ce que** l'ensemble (26) est déterminé à partir de la couleur sélectionnée (27) de manière à ce que l'ensemble (26) comprenne des couleurs qui appartiennent à la même famille de couleurs.

9. Procédé selon l'une des revendications 4 à 8, **caractérisé en ce que** l'ensemble (26) est déterminé à partir de la couleur sélectionnée (27) de manière à ce que l'ensemble (26) comprenne des couleurs qui sont situées dans un espace chromatique spécifié à une distance spécifiée autour de la couleur sélectionnée (27) .

10. Dispositif (1) de commande d'un éclairage d'habitacle (5) d'un véhicule (50), plusieurs unités d'éclairage (4-x) étant disposées de manière répartie dans l'habitacle du véhicule (50), les unités d'éclairage (4-x) étant ou pouvant être associées de manière logique à l'une d'au moins deux zones de couleur (A, B), ledit dispositif comprenant :
- un module d'affichage et de commande (2), et
- un module de commande (3), le module d'affichage et de commande (2) étant conçu pour afficher des profils (21-x) des agencements des au moins deux zones de couleur (A, B) dans l'habitacle du véhicule (50) et pour saisir une sélection, faite par un utilisateur, d'un des profils d'agencement (21-x), chaque profil d'agencement (21-x) définissant ainsi un agencement des au moins deux zones de couleur dans l'habitacle du véhicule (50), et pour saisir, pour chacune des au moins deux zones de couleur (A, B), une sélection de couleur, faite par l'utilisateur, à l'aide d'un élément de commande affiché (23-x), et
le module de commande (3) étant conçu pour régler, pour chaque unité d'éclairage (4-x), une couleur en fonction du profil d'agencement sélectionné (21-x) et des couleurs sélectionnées pour les au moins deux zones de couleur (A, B).
